# EUROPEAN PATENT APPLICATION

(11) **EP 1 041 457 A2**
(43) Date of publication of application: **04.10.2000**
(21) Application number: 00106940.0
(22) Date of filing: 31.03.2000
(51) Int. Cl.: G03H 1/22, G03B 21/00

(54) **Special image reproducing and observing device**

(30) Priority: 31.03.1999 JP 9292999
(71) Applicant: SHISEIDO COMPANY LIMITED, Chuo-ku, Tokyo 104-8010 (JP)
(72) Inventor: Kimura, Asa, c/o Shiseido Research Center (1), Yokohama-shi, Kanagawa 223-8553 (JP)
(74) Representative: Henkel, Feiler, Hänzel

(57) **Abstract**

An observation device for observing a reproduced image which is reproduced by an image reconstructor uses a special light different from normal light. A special image reproducing and observing device 2 enables observation of reproduced image by irradiating an image reconstructor 4 with a special light to reproduce an image. The special image reproducing and observing device 2 has: light sources 6 and 8 which produce special light; a power supply 10 which causes a light emission by the light sources 6 and 8; and a irradiation device 8 and 12 which enables irradiation of an image reconstructor 4 with a special light that is produced at the light source 6 and 8.

## Description

### RELATED APPLICATIONS

This application claims the priority of Japanese Patent Application No. 11-92929 filed on March 31, 1999, which is incorporated herein by reference.

### FIELD OF THE INVENTION

The present invention relates to an improvement of a special image reproducing and observing device that can reproduce an image by irradiation of special light to an image reconstructor, which reproduces a special image for observation.

### BACKGROUND OF THE INVENTION

Conventionally, a hologram is defined as an image that is reproduced by special light. The word hologram may refer to a rainbow hologram that reproduces a stereo image of rainbow color by white light and which has a metal reflecting layer of silver. However, a rainbow hologram is a special processing hologram where the image is reproduced under white light. The hologram is generally recorded by coherent light and observing a reproduced image which requires the coherent light to be of the same wavelength as the recorded wavelength. As for the simple light source that emits such a coherent light, point light of pen light style and the like exist. But such a simple device, which reproduces the image like a hologram, has not existed.

Also, transparent ink, which emits a light only with irradiation of ultraviolet rays, has been developed in recent years. The letters and the designs, which are painted by using that ink, can not usually be seen with white light. An ultraviolet ray lamp is usually used, as an ultraviolet ray irradiation device that causes light emission of the ink for observing the letters and designs. Such a lamp is an insignificant observation device.

Furthermore, there exists a multi-discoloring pigment and the like that shown a different color tone according to the observing angle and the irradiation condition of light by utilizing the interference of light. There also exists a printed article, which is composed as the letters and patterns which are observed according to discoloring by utilizing the multi-discoloring property exist. However, an observation device that can be used for observing the multi-discoloring property not exist.

### SUMMARY OF THE INVENTION

An object of the present invention is to provide a facile observation device to observe more suitably a reproduced image which is reproduced by an image reconstructor when irradiated by a special light different from normal light.

In order to achieve the foregoing object, a special image reproducing and observing device in accordance with the present invention enables observation of a reproduced image by irradiating an image reconstructor with a special light which can reproduce an image, wherein said special image reproducing and observing device has: a light source which produces the special light; a power supply which causes light emission by said light source; and a irradiation device irradiates the image reconstructor with a special light that is produced at said light source.

It is preferable that said special image reproducing and observing device has a cylinder-formed part, and said special image reproducing and observing device emits the special light to the image reconstructor for observing the special image which is reproduced by said special light wherein observation of the special image is enabled without being affected by outside light through said irradiation device which irradiates in the cylinder-formed part and a light is turned on by said power supply after the image reconstructor is covered with said cylinder-formed part.

Also, it is preferable that said cylinder-formed part has an optical element for aiding observation such as a lens, a ground glass, a diffusion board, a screen, or the like at an observation end of cylinder-formed part which is observation side.

Also, it is preferable that said special image reproducing and observing device has plural light sources that emit different kinds of special lights.

Also, it is preferable that said light sources are two kinds wherein one light source emits a first special light where wavelength which is almost single and where the light travels in an almost even direction and another light source emits a second special light which is white light and travels in an almost even direction.

Also, it is preferable that a special image which is reproduced by the special image reproducing and observing device is a hologram image which is reproduced by a hologram image reconstructor.

Also, it is preferable that a special image which is reproduced by special image reproducing and observing device is a letter or figure which is made with an interference substance which shows a color different from a color observed under normal light.

Also, it is preferable that a special image which is reproduced by special image reproducing and observing device is a hologram image which is reproduced by hologram image reconstructor and a letter or figure which is made with an interference substance which shows the color different from a color observed under normal light.

Also, in the present invention, it is preferable that a shape of said special image reproducing and observing device is compact in size and easy to handle.

### BRIEF DESCRIPTION OF THE DRAWINGS

Fig. 1 is a schematic view showing one embodiment of a special image reproducing and observing device in the present invention.
Fig. 2 is a schematic view of the condition which a change switch of a special image reproducing and observing device in the present invention is set to the side of a white light source.
Figs. 3a, 3b and 3c are a schematic views showing another embodiment of a special image reproducing and observing device in the present invention.
Figs. 4a and 4b show the difference between the figure as observed by a special image reproducing and observing device in the present invention and one which observed under the normal light of the seal used in example 2.
Fig. 5 is a schematic view showing one embodiment, where a light source of ultraviolet rays is used for the light source of a special image reproducing and observing device.
Fig. 6 is a schematic view showing one embodiment, where an infrared laser is used for the light source of a special image reproducing and observing device.

### BEST MODE FOR CARRYING OUT THE INVENTION

A special image reproducing and observing device can be suitably used for the image reconstructor that reproduces an image by irradiating special light.

The term "special light" as used in this specification, means a light that is not a normal light. The names of the light that are used in this specification are defined below.

First of all, "normal light" is a general white light such as a fluorescent light or a sunlight such as outside of a house in the daytime that is not limited to the sunny place or shade. Namely, the condition of a normal light is that the light has various wavelengths and that the light travels in various directions.

Other than normal light, there are several kinds in the special light. The types of special light that are used in this specification are defined below.

Light, whose traveling direction is made almost uniform in a specific direction in spite of the existence of various wavelengths, is called "linear light".

Light, whose traveling direction is made almost uniform in a specific direction and which has a wavelength which is almost single, is called "coherent light".

Also, the terms white light, ultraviolet light, infrared light, and the like, when used in combination or alone, mean the same interpretation that is recognized generally.

Based on the aforementioned definitions of light, the special image reproducing and observing device of this invention is explained.

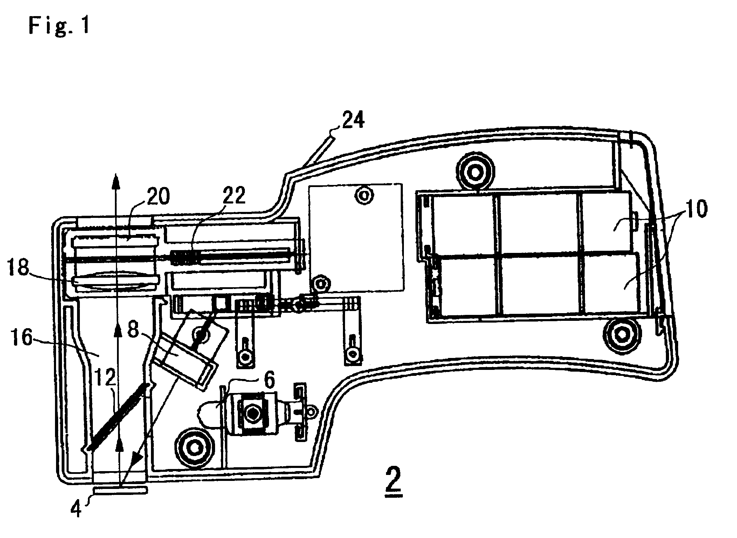

A schematic view of one embodiment of a special image reproducing and observing device in the present invention is shown in Fig. 1.

A special image reproducing and observing device 2 in accordance with the present invention, which is shown in Fig. 1, enables observation of a reproduced image by irradiating with a light to an image reconstructor 4 which reproduces an image by irradiation of special light. And said special image reproducing and observing device has light sources 6 and 8 which produce special light, a power supply 10 which causes a light emission to said light sources 6 and 8 and a irradiation device 8 and 12 which are able to irradiate a image reconstructor 4 with a special lights that are produced at said light sources 6 and 8.

In this embodiment, half-transmission mirror is used as the irradiation device 12. The irradiation device 12 is able to make the linear light of white light by reflecting only the light which is emitted toward the half-transmission mirror from the light source 6. And the linear light of the white light is emitted toward the image reconstructor 4 by the irradiation device 12 which is a half-transmission mirror. Also, the light source 8 is a laser light source and the light source 8 is possible to work itself as the irradiation device because the light that the laser light source emits has strong directivity.

The irradiation device in this invention is not restricted to only the half-transmission mirror and laser light source, although these are used as the irradiation device in this embodiment. To obtain the intended special light, the several optical elements can be used as the irradiation device, for example, a reflection mirror that has the hyperbolic spherical surface whose focus is a light source, a lens which makes the traveling direction of special light almost uniform in specific direction, and the like.

A special image reproducing and observing device of this invention is able to emit a special light that can suitably reproduce the image of the image reconstructor 4 when equipped with the light source, the irradiation device, and the power supply. And observation of a clearly reproduced image is possible by using this device.

There are several articles like the image reconstructor, which is suitably observed by such a device. Those are listed as following: The hologram reconstructor that can reproduce a hologram; The multi-discoloring property material that shows change of color tone by the interference of light; The article that is drawn as a design, a figure, and a letter by said the multi-discoloring property material; The article that is drawn as a design, a figure, and a letter by an ink which emits light by the irradiation of ultraviolet rays; and the like.

It is preferable that the form of those image reconstructors is card, film, transferred foil, seal and the like. However, there is no restriction as to the form of those image reconstructors.

In this embodiment which is showed in Fig. 1, Two light sources are equipped to the special image reproducing and observing device. The device of this embodiment is constructed that the one of light sources 6 or 8 is caused to emit light by change switch 22, when power switch 24 turns on the power. Also if it is required for reproducing the image of the image reconstructor, it is suitable to construct the change switch which makes both of the light sources 6 and 8 emit light, when the power switch 24 turns on the power supply.

Also, in the present invention, it is preferable that a special image reproducing and observing device has a cylinder-formed part within the device. And said irradiation device irradiates in the cylinder-formed part with a light by turning on a power supply after an image reconstructor is covered with said cylinder-formed part as shown in Fig. 1. Accordingly, a special image reproducing and observing device is constituted so as to emit a special light which is emitted to an image reconstructor and a special image can be observed which is reproduced by said special light without being affected by outside light.

Those constitution of the special image reproducing and observing device enables emission the special light to the image reconstructor and suitable observation of the reproduced image. The light reaching the reconstoructor 4 is suitable and in good condition.

In the special image reproducing and observing device which is shown in Fig. 1, the special image reproducing and observing device 2 has a cylinder-formed part 16 as a part of device 2. The special light (such as a laser) can be emitted in the cylinder-formed part 16 by irradiation device 8 and 12 by turning on a power supply 10 by power switch 24 after an image reconstructor 4 is covered with said cylinder-formed part 16.

And it is possible to observe a reproduced image more suitably, because the lens 18 and the diffusion board 20 are equipped at one end of cylinder-formed part 16 which is the observation side.

In this one embodiment of the special image reproducing and observing device of this invention that is shown in Fig. 1, it is composed as the lens 18 and the diffusion board 20 are fixed at the cylinder-formed part 16 by interlocking to the change switch 22 which is set on the laser side.

Namely, the change switch 22 is connected on the laser light source side. And in this condition, the light emission is caused on the laser light source 8 when the power switch 24 is turned on. The laser light, which is emitted from the laser light source 8, is emitted to the image reconstructor 4 and reproduces the image. The reproduced image can be observed when the image is projected on the diffusion board 20 through the half-transmission mirror 12 and the lens 18.

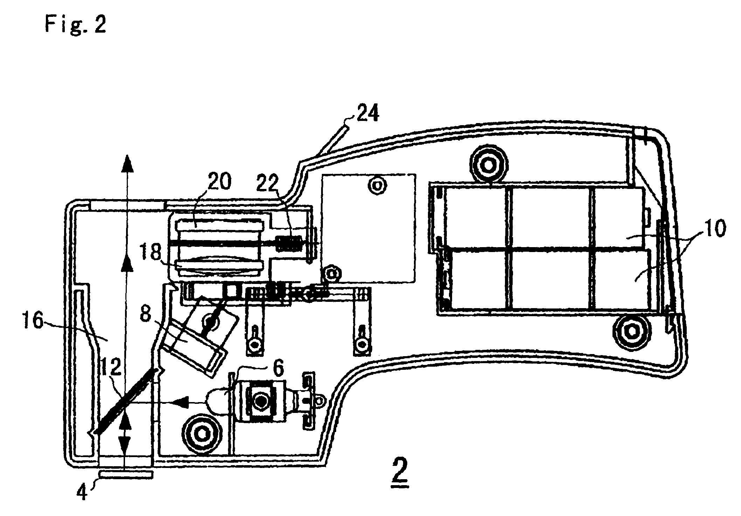

When the light source, which is operated, is changed to the white light source 6 by above-mentioned change switch 22, the diffusion board 20 and the lens 18 are separated from the cylinder-formed part 16 by interlocking to the change as shown in Fig. 2.

A schematic view of the condition which a change switch of a special image reproducing and observing device in the present invention is set to the side of a white light source is shown in Fig. 2. In this condition, the light emission is caused on the white light source 6 when the power switch 24 is turned on. The white light, which is emitted from the white light source 6 and progresses toward the half-transmission mirror 12, is reflected by the half-transmission mirror 12 and is emitted to the image reconstructor 4. Then, that white light reproduces the image and the reproduced image gets out from upper end of the cylinder-formed part 16 through half-transmission mirror 12. In that condition, the reproduced image which is reproduced by the image reconstrutor 4 can be observed by observing the image reconstructor 4 from upper end of the cylinder-formed part 16.

In this one embodiment of this invention, a special image reproducing and observing device, which has two light sources that emit special light, is explained. However, the special image reproducing and observing device that has one light source or has three or more light sources is also suitable.

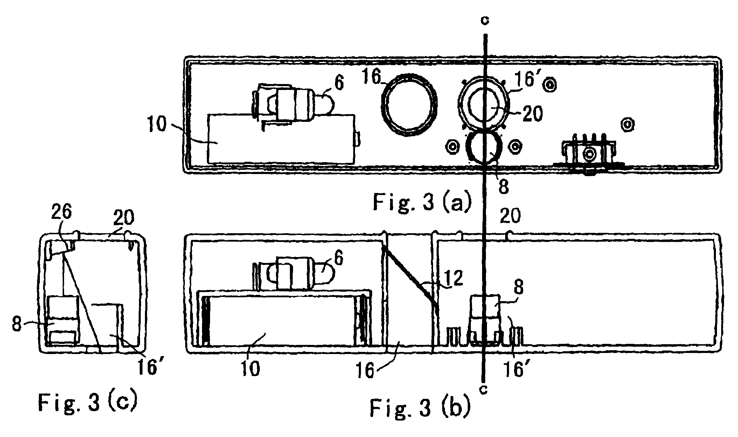

In this embodiment of this invention, the cylinder-formed part is used by two light sources. However, the constitution which each light source has a separate cylinder-formed part separately is preferable, too (see Figs. 3(a)-3(c)). That constitution enables use of the ground glass which is used to prevent laser light from entering the eye directly or the screen which consist of the resin film or the like that is processed emboss processing or the like at cylinder-formed part of laser light source side. On the other hand, a special image reproducing and observing device can be composed so that can be observed an image more clearly by using the lens or the like at cylinder-formed part of white light source side.

Also, it is preferable to compose a special image reproducing and observing device so that each optical element aiding observation can be replaced because the proper optical elements for aiding observation can be used in accordance with the observation image.

The another embodiment is shown in Figs. 3(a)-3(c). Fig. 3 (a) is the upper side figure of this embodiment, (b) is a sectional figure of this embodiment, (c) is a sectional figure of this embodiment at straight line c-c in Figs. 3(a) and (b). In Figs. 3(a)-3(c), the same parts or equal parts corresponding to parts that are shown in Fig. 1 are shown by the same mark. In this embodiment, it is characteristic that the white light source 6 and laser light source 8 have the cylinder-formed part 16, 16 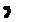 independently. Consequently, the diffusion board 20, which prevents entering the laser light into the eye directly, is constantly provided at one end of cylinder-formed part 16' that is the observation side. In this embodiment, the laser light is emitted toward upside as shown in fig.3 (c) for the miniaturization of the whole device. The laser light is reflected by using the reflection mirror 26 so that the reflected laser light is directed to the image reconstructor.

In this embodiment, it is characteristic that the shape of a special image reproducing and observing device is handy size. In the case that a device is a large, the image reconstructor must be brought on the sample stage of the device. However, to carry the image reconstructor on the sample stage of the device is difficult in the case of the image reconstructor is big or heavy or attached to a large object. But, in the case that the shape of the device is handy size, It is possible to take the device to the place of the image reconstructor. Consequently, it is possible to reproduce an image and to observe a reproduced image, even if the image reconstructor is big or heavy.

A special image reproducing and observing device of this invention is explained in detail by using the examples below.

### Example 1

A hologram film that was recorded to transparent resin film and which was able to reproduce a hologram image was observed by the special image reproducing and observing device which is shown in Fig. 1. This hologram film reproduced the image by red laser light irradiation.

The hologram film was tested for observation under the normal light. However, the recorded hologram image on the film could not be observed at all.

The reproduced hologram image, which was recorded to hologram film, was observed with the device that is shown in Fig. 1. The change switch 22 was set to emit light from a red laser light source, when the power supply 10 was turned on by the power switch 24. After the hologram film 4 was covered with cylinder-formed part 16, the power switch 24 was turned on.

The hologram image was reproduced clearly on the diffusion board 20 that was arranged at the observation side of cylinder-formed part.

### Example 2

A seal (reconstructor) that was composed by retroreflective material and was drawn as a letter by using a multi-discoloring property material. The seal was observed by the special image reproducing and observing device which is shown in Fig. 1.

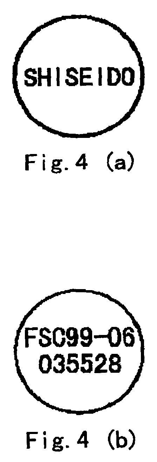

The seal was tested for observation under the normal light and the design which was displayed on the seal was observed as shown in Fig. 4 (a). The letter that is displayed on this seal did not change, although this seal was tasted for observation from various angles.

The seal was observed with the device that is shown in Fig. 2. The change switch 22 was set to emit light from a white light source, when the power supply 10 was turned on by the power switch 24. After the seal was covered with cylinder-formed part 16, the power switch 24 was turned on.

The letter, which was not observed under the normal light, was observed as shown in Fig. 4 (b) from the observation side of cylinder-formed part.

### Example 3

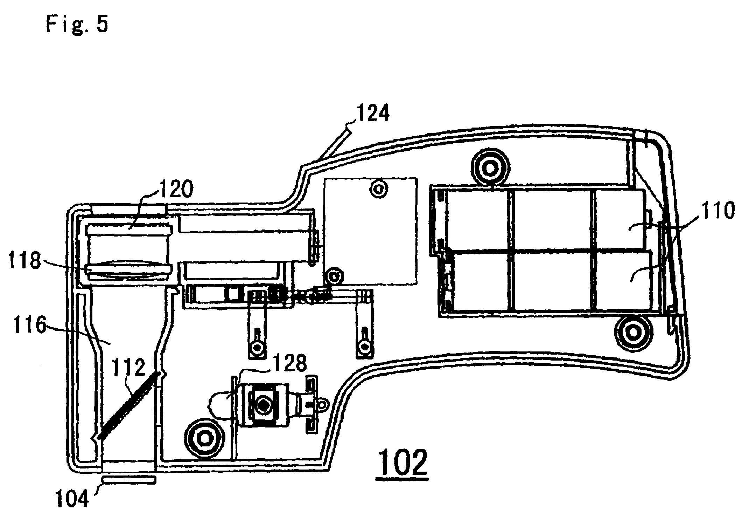

An ultraviolet light emission film which emitted light by ultraviolet rays design was recorded to a transparent resin film by ink. This design was observed by the special image reproducing and observing device which is shown in Fig. 5. In Fig. 5, the same parts or equal parts corresponding to parts that are shown in Fig. 1 are shown by the added 100 to mark. The clearly difference between the Fig. 5 and Fig. 1 is that light source 128 is equipped as the ultraviolet light source.

The ultraviolet light emission film was tested under normal light. The design recorded to film could not observed at all.

The reproduced image, which was recorded to the ultraviolet light emission film, was observed with the device that is shown in Fig. 5. After the ultraviolet light emission film 104 was covered with cylinder-formed part 116, the power supply 110 was turned on by the power switch 124.

The image was reproduced clearly on the diffusion board 120 that was arranged at the observation side of cylinder-formed part 116.

### Example 4

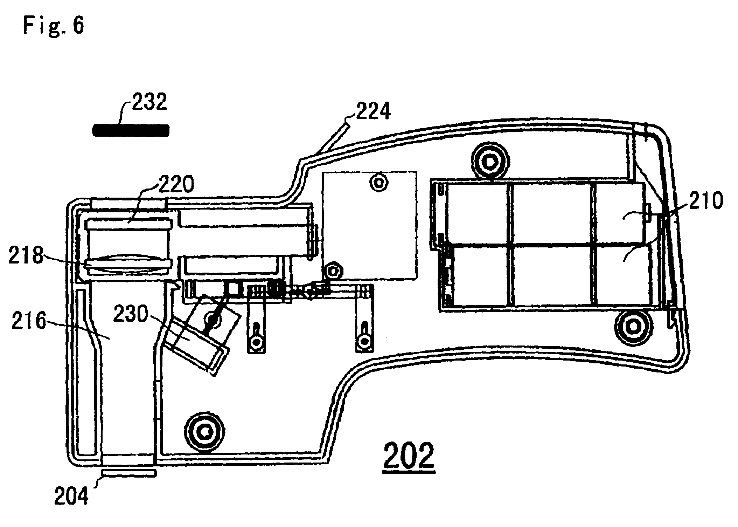

A hologram film image that was recorded to transparent resin film was observed by the special image reproducing and observing device which is shown in Fig. 6. In Fig. 6, the same parts or equal parts corresponding to parts that are shown in Fig. 1 are shown by the added 200 to mark. The clearly difference between the Fig. 6 and Fig. 1 is that infrared light source 230 is equipped as the light source. Furthermore, as the optical element for aiding observation, this device makes it possible to replace the diffusion board 220 with the filter 232 for observing infrared. This hologram film reproduced the image by infrared laser light irradiation.

The hologram film was tested for observation under the normal light. However, the hologram image recorded on the film could not be observed at all.

The reproduced hologram image, which was recorded to hologram film, was observed with the device that is shown in Fig. 6. After the hologram film 204 was covered with cylinder-formed part 216, the power supply 210 was turned on by the power switch 224. The hologram image could not be observe, although the hologram film was observed from the diffusion board 220 that was arranged at the observation side of cylinder-formed part 216.

Then, the diffusion board 220 is replaced with filter 232 for observing an infrared. And the hologram film was observed again, the image could be observed.

### Example 5

A hologram film image that was recorded to transparent resin was observed by the special image reproducing and observing device which is shown in Fig. 1. This hologram film reproduced the kinds of images by white light irradiation and a Fourier transformation hologram image by red laser light irradiation.

The hologram film was tested for observation under the white light without device, the 2 dimension of the letter image was observed into space on hologram film, when the white light enters the film from the one direction. Furthermore, the 3 dimension of the object image was observed into space, according to the incidence direction of white light is changing.

However, except for these 2 images, the image could not be observed even if the white light was emitted to the film from any direction without device.

The reproduced hologram image, which was recorded on hologram film, was observed with the device that is shown in Fig. 1. The change switch 22 was set to emit light from a red laser light source, when the power supply 10 was turned on by the power switch 24. After the hologram film 4 was covered with cylinder-formed part 16, the power switch 24 was turned on.

The hologram image was reproduced clearly on the diffusion board 20 that was arranged at the observation side of cylinder-formed part. This image was different from the hologram images of 2D and 3D that were observed under white light.

Also, this invention is not restricted to only the examples that are shown above. For example, in the case where the image that was recorded on the hologram film is reproduced, reproducing the hologram image requires emitting light at the angle that is required reproduce the hologram image. Accordingly, it is preferable that a special image reproducing and observing device of this invention be constructed so that the light irradiation angle can be adjusted.

As mentioned hereinbefore, the special image reproducing and observing device in accordance with the present invention allows reproduction of an image that can not be observed under normal light. It is possible to observe the image clearly and easily.

## Claims

1. A special image reproducing and observing device which enables observation of a reproduced image by irradiating an image reconstructor with a special light,
wherein said special image reproducing and observing device has:
a light source which produces the special light;
a power supply which causes light emission by said light source ; and
an irradiation device which irradiates the image reconstructor with the special light that is produced at said light source.

2. A special image reproducing and observing device according to claim 1,
wherein said special image reproducing and observing device has a cylinder-formed part, and said special image reproducing and observing device emits the special light to the image reconstructor for observing of the special image which is reproduced by said special light,
wherein said irradiation device irradiates in the cylinder-formed part and observing of the special image is enabled without being affected by outside light, and
a light is turned on by said power supply after the image reconstructor is covered with said cylinder-formed part .

3. A special image reproducing and observing device according to claim 2, wherein said cylinder-formed part has an optical element for aiding observation such as a lens, a ground glass, a diffusion board, a screen, or the like at an observation end of the cylinder-formed part which is an observation side.

4. A special image reproducing and observing device according to any one of claims 1 to 3, wherein said special image reproducing and observing device has plural light sources that emit different kinds of special light.

5. A special image reproducing and observing device according to claim 4, wherein said light sources are two kinds,
wherein one light source emits a first special light where wavelength is almost single and where the light travels in an almost even direction, and
another light source emits a second special light which is white light and travels in an almost even direction.

6. A special image reproducing and observing device according to any one of claims 1 to 5, wherein the special image which is reproduced by the special image reproducing and observing device is a hologram image.

7. A special image reproducing and observing device according to any one of claims 1 to 5, wherein the special image which is reproduced by the special image reproducing and observing device is a letter or figure which is made with an interference substance which shows a color different from a color observed under normal light.

8. A special image reproducing and observing device according to any one of claims 1 to 5, wherein the special image which is reproduced by the special image reproducing and observing device is a hologram image which is reproduced by a hologram image reconstructor and a letter or figure which is made with an interference substance which shows the color different from a color observed under normal light.

9. A special image reproducing and observing device according to any one of claims 1 to 8, wherein a shape of said special image reproducing and observing device is compact in size and easy to handle.
